# EUROPEAN PATENT APPLICATION

(11) **EP 1 936 286 A1**
(43) Date of publication of application: **25.06.2008**
(21) Application number: 06425853.6
(22) Date of filing: 21.12.2006
(51) Int. Cl.: F24D 12/02

(54) **Heating system**

(71) Applicant: IRSAP SPA, 45031 Arqua'Polesine (IT)
(72) Inventor: Zen, Alessandro, 45100 Rovigo (IT)
(74) Representative: Cerbaro, Elena

(57) **Abstract**

The heating system (1) comprises a boiler (2), a plurality of heating elements (11), such as for example radiators, towel warmers and the like, and a water channel between the boiler (2) and the heating elements (11) and vice versa. The main feature of the present invention consists in the fact that the system (1) further comprises a reservoir (3) installed along the above-mentioned channel; an electrical resistor (16) inserted within the reservoir (3) and adapted if activated to heat the water present in the reservoir (3) and an electronic control unit (21) of the electrical resistor (16).

## Description

The present invention relates to a heating system, specifically for homes.

As it is known, heating systems for homes comprise a boiler and a plurality of radiators or heating elements distributed in the home. It is also known that there are laws contemplating a restriction of both the times and the period in which heating by means of the boiler may be activated. It must be stressed that these restrictions do not account for the climatic variations which occur and which imply days with very low temperatures also in the periods in which the non-activation of the heating by means of the boiler is contemplated. These restrictions are contemplated for heating by means of methane or oil fuel boilers only.

Currently, in order to obtain a heating in the home also during periods not contemplated by the law, users normally make provision by installing an electrical heater to be transferred on a case-by-case basis into the room where a higher temperature than ambient temperature is required, or by using an appropriate electrical resistor to be inserted in each single radiator.

The drawbacks which are found in the currently used heating systems are apparent from the above.

Specifically, in the case of restricted use of a boiler, the only possibility of heating an environment consists in the purchase and installation of a heater, of electrical or other type. Other heating devices (electrical heater) are thus required with all the costs which derive especially when the rooms to be heated are in large number or large in size. Furthermore, the activation of these further heating devices is manual. Indeed, the user must firstly verify the deactivation of the boiler and then activate the electrical heater or the electrical resistor inserted in the radiator in the chosen room.

It is the object of the present invention to make a heating system which is free from the drawbacks mentioned above.

According to the present invention, a heating system is made of the type comprising:
a boiler;
a plurality of heating elements, such as for example radiators, towel warmers and the like;
a water channel between said boiler and said heating elements and vice versa;
characterised in that it comprises:
a reservoir installed along said channel;
an electrical resistor inserted within said reservoir and adapted if activated to heat the water present in said reservoir; and
an electronic control unit of said electrical resistor.

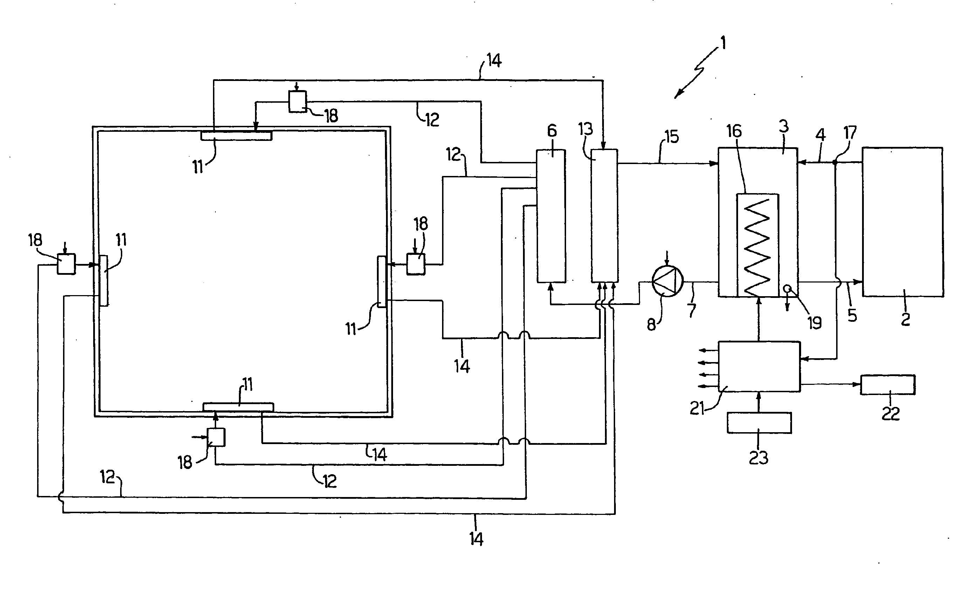

The present invention will now be described with reference to the attached drawing which illustrates a preferred embodiment of a heating system indicated, as a whole, by numeral 1.

System 1 comprises:
a boiler 2 of the methane gas, oil or other fuel type;
a reservoir 3;
a pipe 4 adapted to channel hot water from boiler 2 to reservoir 3;
a return pipe 5 of the water from reservoir 3 to boiler 2;
a first manifold 6;
a pipe 7 adapted to channel hot water from reservoir 3 to manifold 6;
a pump 8 installed along pipe 7;
a plurality of heating elements 11, such as radiators, towel warmers and the like, installed in one or more rooms, e.g. in a home;
a plurality of pipes 12 adapted to channel hot water from first manifold 6 to the aforesaid heating elements 11;
a second manifold 13;
a plurality of pipes 14 adapted to channel the water from elements 11 to manifold 13; and
a pipe 15 adapted to channel the water from manifold 13 to reservoir 3.

System 1 further comprises:
an electrical resistor 16 installed within reservoir 3;
a sensor 17 installed along pipe 4 and adapted to detect the temperature of the hot water which from boiler 2 is channelled towards reservoir 3;
a solenoid valve 18 installed along each pipe 12 and adapted to open or close the hydraulic communication between manifold 6 and elements 11;
a sensor 19 adapted to detect the temperature of the water present in reservoir 3; and
an electronic control unit 21 to which sensors 17 and 19 are connected and which manages pump 8, electrical resistor 16 and solenoid valves 18.

A display 22 which displays all the operating data of system 1 and a block 23 for setting such data are connected to control unit 21.

In use, it is possible, by means of block 23, to set the operating data of system 1, i.e.:
the activation of electrical resistor 16 for heating the water present in reservoir 3 when sensor 17 detects a temperature lower than that predetermined by the user again for reservoir 3;
the selection of elements 11 towards which to send the hot water by managing the solenoid valves 18;
the temperature degree, detected by sensor 19, to which to take the water present in reservoir 3 by means of the management of the electrical resistor 16; and
the selection of the period of time for which to put elements 11 into hydraulic communication with manifold 6.

Given that the temperature of the water output by boiler 2 may be subject to restrictions imposed by the competent authorities, electrical resistor 16 may be activated to reach the required temperature in reservoir 3 by means of control unit 21. Essentially, electrical resistor 16 may either replace boiler 2 for heating the water present in reservoir 3 or integrate the heating defined by boiler 2.

It is apparent that control unit 21 may be integrated with the control unit which equips boiler 2 and which manages the operation of the latter. Furthermore, sensor 17 may be replaced by a sensor within boiler 2 again however adapted to detect the temperature of the hot water output from boiler 2.

From the above description, the advantages obtained with the implementation of the present invention are apparent.

Specifically, a heating system which uses the same heating elements typical of a system with the boiler only has been made, while allowing to activate either a normal boiler or an electrical resistor. Essentially, in the case of deactivation of the boiler, the heating in the environment is ensured again with the same heating elements changing only the heating energy source. It is therefore not necessary to equip with environment with further heating elements, portable or not, alternatively to the heating elements already installed. The possibility of either compensating for or integrating the work performed by the boiler allows to determine the heating of the environment at the chosen temperature also during the periods in which there are restrictions to boiler activation. Furthermore, it is possible to select which heating elements to be used and the time of use thereof.

## Claims

1. A heating system of the type comprising:
a boiler (2);
a plurality of heating elements (11), such as for example radiators, towel warmers and the like;
a water channel between said boiler (2) and said heating elements (11) and vice versa;
**characterised in that** it comprises:
a reservoir (3) installed along said channel;
an electrical resistor (16) inserted within said reservoir (3) and adapted if activated to heat the water present in said reservoir (3); and
an electronic control unit (21) of said electrical resistor (16).

2. A system according to claim 1 **characterised in that** it comprises a first sensor (17) adapted to detect the temperature of the hot water output from said boiler (2) towards said reservoir (3) so that said control unit (21) may control the activation of said electrical resistor (16) if such temperature is lower than a predetermined value.

3. A system according to claim 2 **characterised in that** it comprises a second sensor (19) adapted to detect the temperature degree of the water present in said reservoir (3) so that said control unit (21) may control the activation of said electrical resistor (21) to reach the chosen temperature degree by the water present in said reservoir (3).

4. A system according to any of the preceding claims **characterised in that** is comprises a block (23) connected to said control unit (21) and used for setting operating data of said system.

5. A system according to at least one of the preceding claims **characterised in that** it comprises means (18) for opening and closing said channel for each of said heating elements (11); said means (18) being managed by said control unit (21).

6. A system according to the preceding claims **characterised in that** said channel comprises:
a first pipe (4) adapted to channel the water from said boiler (2) to said reservoir (3);
a second pipe (5) adapted to channel the water from said reservoir (3) to said boiler (2);
a first manifold (6) hydraulically connected to said reservoir (3) by means of a third pipe (7);
a plurality of fourth pipes (12) adapted to channel the water from said first manifold (6) to each of said heating elements (11);
a second manifold (13) hydraulically connected to said heating elements by means of a respective fifth pipe (14) and to said reservoir (3) by means of a sixth pipe (15);
along said third pipe (7) being installed a pump (8) managed by said control unit (21) and along each of said fourth pipes (12), said means (18) being installed.
